# EUROPÄISCHE PATENTSCHRIFT

(11) **EP 2 084 026 B1**
(45) Veröffentlichungstag und Bekanntmachung des Hinweises auf die Patenterteilung: **17.11.2010**
(21) Anmeldenummer: 07818933.9
(22) Anmeldetag: 12.10.2007
(51) Int. Cl.: B60H 1/22

(54) **VERFAHREN ZUM BETREIBEN EINES ELEKTRISCHEN ZUHEIZERS IN EINEM KRAFTFAHRZEUG**
METHOD FOR OPERATING AN ELECTRICAL AUXILIARY HEATER IN A MOTOR VEHICLE
PROCEDE DE FONCTIONNEMENT D'UN CHAUFFAGE ELECTRIQUE AUXILIAIRE D'UN VEHICULE AUTOMOBILE

(30) Priorität: 18.10.2006 DE 102006049148
(43) Veröffentlichungstag der Anmeldung: 05.08.2009
(73) Patentinhaber: BorgWarner BERU Systems GmbH, 71636 Ludwigsburg (DE)
(72) Erfinder: BRUST, Jürgen, 73547 Lorch (DE); MERTE, Rolf, Dr., 69168 Wiesloch (DE); LEHMANN, Klaus, 75038 Oberderdingen (DE); MULCZET, Andreas, 71563 Affalterbach (DE)
(74) Vertreter: Mommer, Niels
(86) Internationale Anmeldenummer: PCT/EP2007/008862
(87) Internationale Veröffentlichungsnummer: WO 2008/046558

(56) Entgegenhaltungen:
- EP-A- 1 666 284
- DE-A1- 10 104 056
- DE-A1- 10 355 396
- DE-A1- 10 355 397
- DE-A1- 19 912 764
- DE-C1- 4 315 379
- FR-A- 2 818 197
- US-A- 5 130 659
- US-A1- 2001 025 889

## Beschreibung

Die Erfindung geht von einem Verfahren mit den im Oberbegriff des Anspruchs 1 angegebenen Merkmalen aus. Ein solches Verfahren ist aus der DE 103 55 396 A1 bekannt. Durch das bekannte Verfahren werden Klimaanlagen mit elektrischen Zusatzheizeinrichtungen, nachfolgend kurz elektrische Zuheizer genannt, betrieben.

Aus der US 200110025889 A1 ist eine Standheizung bekannt, wobei während des Betriebs der Standheizung die Spannung einer Fahrzeugbatterie überwacht wird und ein Alarm ausgelöst wird, sobald die Batteriespannung unter einen vorgegebenen Schwellenwert absinkt

Moderne Dieselmotoren haben einen so hohen thermisch/mechanischen Wirkungsgrad, dass ihre Abwärme für eine rasche Aufheizung des Fahrzeuginnenraumes nicht mehr ausreicht. Um dem abzuhelfen, ist es bekannt, elektrische Zuheizer einzubauen, die meistens mit PTC-Elementen als Heizelementen arbeiten. Sie erhalten bei laufendem Motor den erforderlichen elektrischen Strom aus der Lichtmaschine des Fahrzeuges. Wenn der Motor abgeschaltet ist, liefert die Lichtmaschine keinen Strom. Um den Innenraum eines Fahrzeuges auch bei stehendem Motor erwärmen zu können, sind Standheizungen bekannt. Herkömmliche Standheizungen verbrennen den im Fahrzeug mitgeführten Kraftstoff, also Dieselkraftstoff oder Benzin, und erwärmen damit Luft, die von einem Gebläse in den Innenraum des Fahrzeuges geblasen wird, oder Wasser, welches sich in einem Heizkreislauf des Fahrzeuges befindet und über einen Wärmetauscher seine Wärme an Luft abgibt, die dann mit einem Gebläse in den Innenraum des Fahrzeuges gelangt. Solche herkömmliche Standheizungen sind verhältnismäßig aufwendig, benötigen reichlich Platz, erzeugen schädliche Abgase, manchmal auch Rauch, und können deshalb praktisch nur im Freien, nicht aber in der Hausgarage, im Parkhaus oder in einer Tiefgarage betrieben werden.

Aus der DE 103 55 396 A1 ist es bekannt, einen PTC-Zuheizer auch als Standheizung zu benutzen, indem er mit Strom aus dem öffentlichen Wechselstromnetz betrieben wird. Da PTC-Zuheizer im Fahrzeug üblicherweise mit 12 V Gleichspannung betrieben werden, können sie nicht ohne weiteres mit 230 V Wechselspannung betrieben werden. Die DE 103 55 396 A1 schlägt zu diesem Zweck vor, die PTC-Elemente, die im Fahrbetrieb parallel geschaltet sind, für das Betreiben als Standheizung elektrisch hintereinander zu schalten, z.B. 16 PTC-Elemente hintereinander, um die Netzspannung von 230 V auf diese Weise gleichmäßig auf die 16 PTC-Elemente aufzuteilen. Nachteilig dabei ist, dass ein solcher elektrischer Zuheizer nur dann als Standheizung benutzt werden kann, wenn eine elektrische Netzsteckdose in greifbarer Nähe ist. Das ist jedoch in den meisten Fällen nicht der Fall, insbesondere dann nicht, wenn das Fahrzeug im Freien geparkt wird, doch gerade dann ist der Bedarf an einer funktionierenden Standheizung am größten.

Aus der DE 103 55 397 A1 sind Klimaanlagen mit Standklimatisierung bekannt, die als Hilfsantrieb einen kleinen Dieselmotor aufweisen. Diese sind jedoch relativ laut, schwer, aufwendig und erzeugen ebenfalls unerwünschte schädliche Abgase. Zur Abhilfe schlägt die DE 103 55 397 A den Einbau einer nicht weiter erläuterten Hilfsenergieversorgung bzw. Notenergieversorgung vor, welche aus dem öffentlichen Wechselspannungsnetz über einen Elektromotor gespeist werden kann und überschüssige Energie über den dann als Generator wirkenden Elektromotor an andere elektrische Verbraucher des Fahrzeuges abgibt. Dieser Vorschlag hat ähnliche Nachteile wie der Vorschlag aus der DE 103 55 396 A1.

Aus der DE 199 12 764 A1 ist ein mobiles Heizgerät zur Beheizung des Innenraums von Kraftfahrzeugen bekannt, welches die Abhängigkeit von einer elektrischen Netzsteckdose in erreichbarer Nähe dadurch vermeidet, dass sie ein Speichermedium, z.B. Schamottesteine, enthält, die zuvor im Haus erwärmt werden und deren Wärme im Fahrzeug durch ein Gebläse abgegeben wird, welches im mobilen Heizgerät vorgesehen und mit Strom aus der Fahrzeugbatterie betrieben wird. Ein solches mobiles Heizgerät ist aufwendig in der Herstellung, beschwerlich in der Handhabung und sperrig, so dass es nicht beliebig mitgeführt werden kann.

Der vorliegenden Erfindung liegt die Aufgabe zugrunde, eine einfachere und weniger aufwendige Möglichkeit zur Beheizung eines Fahrzeuges im Stand vorzusehen.

Diese Aufgabe wird durch ein Verfahren mit den im Patentanspruch 1 angegebenen Merkmalen gelöst. Vorteilhafte Weiterbildungen der Erfindung sind Gegenstand der Unteransprüche.

Erfindungsgemäß wird in einem Kraftfahrzeug, welches als Stromquelle wenigstens eine wiederaufladbare elektrochemische Zelle und einen mit dieser verbundenen, von einem Antriebsmotor des Kraftfahrzeuges angetriebenen elektrischen Generator hat, von welchem ein elektrischer Zuheizer bei laufendem Antriebsmotor mit Strom versorgt werden kann, der Zuheizer bei Bedarf auch dann mit Strom versorgt, wenn der Generator keinen Strom liefert. In diesem Fall wird der Zuheizer auf wenigstens eine elektrochemische Zelle als Stromquelle geschaltet, der Ladezustand wenigstens einer elektrochemischen Zelle wird überwacht und die durch die überwachte wenigstens eine elektrochemische Zelle erfolgende Stromversorgung des elektrischen Zuheizers wird wieder unterbrochen, wenn der Ladezustand der überwachten wenigstens einen elektrochemischen Zelle einen unteren Grenzwert unterschreitet. Auf diese Weise lässt sich Heizwärme auch im Stillstand des Kraftfahrzeuges erzeugen, wenn der vom Antriebsmotor des Kraftfahrzeuges angetriebene elektrische Generator keinen Strom liefert, und zwar soweit der Ladezustand der elektrochemischen Zellen dieses zulässt und eine vorgebbare Restladung erhalten bleibt. Als elektrochemische Zellen kommen z. B. Bleiakkumulatoren, Nickel-Metallhydrid-Balterien, Lithiumionen-Akkumulatoren und Brennstoffzellen infrage.

Die Erfindung hat wesentliche Vorteile:
- Die Erfindung lässt sich mit minimalem Aufwand verwirklichten.
- Viele Kraftfahrzeuge haben bereits die Möglichkeit, den Ladezustand einer elektrochemischen Zelle zu überwachen. In diesem Fall lässt sich die Erfindung bereits dadurch verwirklichen, dass im Fahrzeug für den elektrischen Zuheizer und gegebenenfalls für eine Lüftungsanlage und/oder Klimaanlage ohnehin vorhandene Steuereinrichtungen erfindungsgemäß angepasst werden so dass sie das erfindungsgemäße Verfahren zusätzlich ausführen können.
- Steuereinrichtungen in Kraftfahrzeugen arbeiten heute überwiegend mit elektronischen Rechenbausteinen, z.B. mit einem Mikroprozessor oder mit einem Mikrocontroller oder mit einem anwendungsspezifischen integrierten Schaltkreis (ASIC). In diesen Fällen kann die Erfindung verwirklicht werden, indem die Programmierung der beteiligten Rechenbausteine angepasst wird. Zusätzliche Hardware wird in diesen Fällen nicht benötigt, abgesehen von einem allenfalls erforderlichen Messfühler für die Überwachung des Ladezustandes einer elektrochemischen Zelle, soweit das Kraftfahrzeug in Einzelfall mit einem solchen Messfühler noch nicht ausgestattet gewesen sein sollte.
- Dadurch, dass das erfindungsgemäße Verfahren allein oder im wesentlichen durch Anpassung von Software verwirklicht werden kann, ist es einfach, die Erfindung an unterschiedliche Fahrzeugtypen gemäß den Wünschen des Fahrzeugherstellers individuell anzupassen. Die Erfindung bietet deshalb dem Anwender oder Zulieferer ein hohes Maß an Flexibilität für individuelle Ausführungsformen der Erfindung.
- Der im Fahrzeug vorhandene elektrische Zuheizer kann doppelt ausgenutzt werden: Bei abgestelltem Fahrzeug als Standheizung, während der Fahrt als Zuheizer, der von dem Generator des Fahrzeuges - von der "Lichtmaschine" - mit Strom versorgt wird.
- Die Erfindung lässt sich ausserordentlich kostengünstig verwirklichen.
- Durch die Doppelausnutzung eines vorhandenen Zuheizers werden im Fahrzeug Bauraum und Gewicht gespart.
- Nachteile einer herkömmlichen, Kraftstoff verbrennenden Standheizung, wie z.B. schädliche Abgase, schädliche Rauchentwicklung, Geruchsbelästigung, im Störfall auch Brandgefahr, werden vermieden.
- Durch die Möglichkeit, den elektrischen Zuheizer sowohl als Standheizung als auch als Zusatzheizung während der Fahrt zu benutzen, wird in Fahrzeugen, die heute noch keinen elektrischen Zuheizer haben, die Verwendung eines solchen begünstigt, dadurch der Absatz von Zuheizem gesteigert, was wiederum eine Verbilligung der Zuheizer nach sich zieht, weil diese in größeren Stückzahlen rationeller zu fertigen sind.
- Die Erfindung eignet sich nicht nur für Fahrzeuge mit Dieselmotoren, sondern auch für solche mit Ottomotoren, für Fahrzeuge mit Elektromotoren, die durch Brennstoffzellen mit Strom versorgt werden, und auch für Fahrzeuge mit Hybridantrieb, d.h., mit einer Kombination eines Ottomotores oder Dieselmotores mit einem Elektromotor, der aus Brennstoffzellen oder modernen Batterien wie z. B. Nickel-Metallhydrid-Batterien gespeist wird. Fahrzeuge, die für den Antrieb einen Elektromotor haben, der von Brennstoffzellen gespeist wird, eignen sich besonders für die Anwendung der vorliegenden Erfindung, weil Brennstoffzellen sehr viel mehr Heizenergie liefern können als ein herkömmlicher Bleiakkumulator, der bei Fahrzeugen, die ausschließlich mit einem Ottomotor oder mit einem Dieselmotor angetrieben werden, für den Betrieb eines Zuheizers als Standheizung zur Verfügung steht.

Der Patentanspruch 1 gibt an, dass der elektrische Zuheizer bei Bedarf, wenn der im Fahrzeug vorhandene elektrische Generator keinen Strom liefert, auf eine oder mehrere im Fahrzeug vorhandene elektrochemische Zellen als Stromquelle geschaltet werden kann. Der elektrische Generator kann die im Kraftfahrzeug üblicherweise vorhandene Lichtmaschine sein. Es könnte sich aber auch um irgend einen anderen Generator handeln, der im Fahrzustand, nicht aber bei abgestelltem Fahrzeug, Strom liefert. Die elektrochemische Zelle, auf welche der Zuheizer geschaltet werden kann, wenn der Generator keinen Strom liefert, ist bei einem Fahrzeug, welches ausschließlich durch einen Ottomotor oder einen Dieselmotor angetrieben wird, die Fahrzeugbatterie, welche auch als Starterbatterie bezeichnet wird, weil ihre Hauptaufgabe der Start des Verbrennungsmotors ist. Die Starterbatterie ist üblicherweise ein Bleiakkumulator oder ein anderer galvanischer Akkumulator, welchem im Stand elektrischer Strom entnommen werden kann, soweit sein Ladezustand es zulässt, und der während der Fahrt durch den Generator - die "Lichtmaschine" - wieder aufgeladen wird. Bei einem Kraftfahrzeug, welches ausschließlich von einem oder mehreren Elektromotoren oder von einem oder mehreren Elektromotoren in Kombination mit einem Ottomotor oder Dieselmotor (Hybridantrieb) angetrieben wird, wobei der wenigstens eine Elektromotor aus Brennstoffzellen mit Strom versorgt wird, kann der Zuheizer aus den Brennstoffzellen mit Strom versorgt werden. In diesem Fall sind die Brennstoffzellen eine elektrochemische Zelle im Sinne der Erfindung. Brennstoffzellen, die elektrischen Strom durch eine kalte Verbrennung von Wasserstoff gewinnen, sind zum Antreiben von Kraftfahrzeugen Stand der Technik. Fahrzeuge mit einem Hybridantrieb können als Stromquelle für den elektrischen Antrieb anstelle von Brennstoffzellen wiederaufladbare Metallhydrid-Batterien haben, insbesondere Nickel-Metallhydrid-Batterien, oder Lithiumionen-Akkumulatoren. Auch sie sind elektrochemische Zellen im Sinne der Erfindung.

Unter dem Ladezustand der elektrochemischen Zelle, welcher erfindungsgemäß überwacht wird, ist im Falle einer Starterbatterie, einer Metallhydridbatterie und eines Lithiumionen-Akkumulators der üblicherweise in Amperestunden angegebene elektrische Ladezustand der Batterie zu verstehen. Im Falle eines Fahrzeugantriebes mit Hilfe von Brennstoffzellen ist als Ladezustand der elektrochemischen Zelle im Sinne der Erfindung der für die kalte Verbrennung in den Brennstoffzellen verfügbare Brennstoffvorrat zu verstehen. Soweit Fahrzeuge heute mit Hilfe von Brennstoffzellen angetrieben werden, werden solche Brennstoffzellen verwendet, welche Wasserstoff verbrennen. Der Wasserstoff wird entweder in Flüssiggasflaschen, in Druckgasflaschen oder in einem Feststoffspeicher auf der Basis eines Metallhydrids, z.B. Zirkonhydrid, gespeichert mitgeführt. Der Ladezustand der elektrochemischen Zelle im Sinne der Erfindung ist dann der noch vorhandene Wasserstoffvorrat.

Bei einem Fahrzeug, welches ausschließlich durch einen Ottomotor oder einen Dieselmotor angetrieben wird und für die Stromversorgung des Zuheizers bei abgestelltem Motor nur die Starterbatterie zur Verfügung steht, wird der untere Grenzwert des Ladezustandes zweckmäßigerweise so gewählt, dass mit der Restladung der Batterie das Fahrzeug noch sicher gestartet werden kann.

Bei einem Fahrzeug mit Brennstoffzellenantrieb wird der untere Grenzwert des Ladezustandes zweckmäßigerweise so gewählt, dass der restliche Wasserstoffvorrat noch sicher ausreicht, um mit dem Fahrzeug eine Tankstelle zu erreichen, bei welcher der Wasserstoffvorrat ergänzt werden kann.

Bei einem Fahrzeug mit Hybridantrieb und Brennstoffzelle kann der Wasserstoffvorrat für den Betrieb des Zuheizers als Standheizung vollständig verbraucht werden, soweit sichergestellt ist, dass im Kraftstofftank für den Ottomotor oder Dieselmotor noch genügend Kraftstoff vorhanden ist, um die nächste Tankstelle zu erreichen.

Bei einem Fahrzeug mit Hybridantrieb und zwei Batteriesystemen, z. B. mit einer Starterbatterie und einer Metallhydridbatterie, kann die Ladung einer Batterie vollständig für den Betrieb des Zuheizers als Standheizung verbraucht werden. Die zur Zeit käuflichen Hybridfahrzeuge besitzen 2 Batterien, eine 12 V Starterbatterie und eine 201,6 V Ni-Metallhydrid-Batterie für den Elektromotor. Vorzugsweise wird in diesem Fall die Ladung der Metallhydridbatterie verbraucht, die Starterbatterie jedoch geschont, so dass die Startfähigkeit erhalten bleibt.

Die Startfähigkeit einer Starterbatterie hängt nicht nur vom Ladezustand, sondern auch von der Temperatur ab. Je kälter die Batterie ist, desto geringer ist die Leistung, die der Batterie entnommen werden kann. Vorzugsweise wird deshalb der Grenzwert des Ladezustandes, bis zu welchem der Batteriestrom für den Zuheizer entnommen werden kann, temperaturabhängig ausgewählt. Vorzugsweise wird dazu die Temperatur des Antriebsmotors gemessen, insbesondere die Kühlwassertemperatur. Ist das Fahrzeug längere Zeit gestanden, werden die Kühlwassertemperatur und die Batterietemperatur mit der Außentemperatur im Gleichgewicht sein. Hat der Motor einige Zeit, nachdem er abgestellt wurde, noch Restwärme, kann die Kühlwassertemperatur von der Batterietemperatur abweichen. Aber auch in diesem Fall wird die Batterie vom voraufgegangenen Fahrbetrieb noch Restwärme haben, sei es dadurch, dass sie indirekt vom Motor Wärme aufgenommen hat, sei es dadurch, dass sie durch den Ladevorgang erwärmt wurde. Auch in diesem Fall ist eine Messung der Temperatur des Kühlwassers vorteilhaft, um einerseits die Startfähigkeit der Batterie sicherzustellen und andererseits der Batterie möglichst viel Heizenergie entnehmen zu können.

Es ist aber auch möglich, den Grenzwert des Ladezustandes der Starterbatterie ohne Rücksicht auf die Temperatur festzulegen, und zwar so, dass auch bei der kältesten noch vorkommenden Temperatur, z.B. bei -30°C, die Startfähigkeit der Batterie gewährleistet ist. Einen solchen temperaturabhängigen Grenzwert kann man z.B. so festlegen, dass er einen bestimmten Bruchteil der Nennkapazität der Batterie beträgt. Diese Festlegung trifft der Fahrzeughersteller, welcher auch eine maximale Heizdauer für den Zuheizer bestimmen kann.

Moderne Fahrzeuge haben eine durch Funk betätigbare Schließanlage. Insbesondere bei solchen Fahrzeugen ist es eine vorteilhafte Weiterbildung der Erfindung, den elektrischen Zuheizer durch ein Funksignal auf die elektrochemische Zelle zu schalten. Ein Fahrzeug, welches über Nacht auf der Straße geparkt ist, kann auf diese Weise ohne das Haus verlassen zu müssen, durch ein Funksignal veranlasst werden, den Zuheizer auf die elektrochemische Zelle zu schalten. Eine entsprechende Möglichkeit bietet sich bei Fahrzeugen, die mit Mobilfunk ausgestattet sind. In diesem Fall kann man ein nachrichtentechnisches Signal übermitteln, mit welchem der elektrische Zuheizer auf eine elektrochemische Zelle geschaltet wird.

Soweit die Kapazität der für das Zuheizen benutzten Batterie oder des Wasserstoffspeichers eines Brennstoffzellenantriebs den gewählten unteren Grenzwert noch nicht erreicht hat, wird der Zuheizer zweckmäßigerweise entweder nach einer vorgewählten Heizdauer oder nach Erreichen einer vorgewählten Schwelle der Innenraumtemperatur des Fahrzeuges abgeschaltet, wobei die Temperaturschwelle bzw. der Grenzwert der Heizdauer vorzugsweise individuell vorwählbar sind. Soweit der Ladezustand der Batterie bzw. des Wasserstoffspeichers eines Brennstoffzellenantriebes dies erlaubt, kann die Temperatur der Innenraumluft des Fahrzeuges auch auf einen vorgewählten Wert geregelt werden, so dass die vorgewählte Temperatur auch dann gehalten wird, wenn sich der Fahrer erst später als geplant zum Fahrzeug begibt.

Während des Betriebes des Zuheizers als Standheizung wird dieser vorzugsweise im Umluftbetrieb betrieben. Im Umluftbetrieb wird die Luft lediglich im Innenraum des Fahrzeuges umgewälzt, ein Luftaustausch mit der äußeren Umgebung ist unterbunden. Das ist zweckmäßig, um möglichst wenig Heizenergie an die äußere Umgebung zu verlieren.

Weitere Merkmale und Vorteile ergeben sich aus der Beschreibung von zwei Ausführungsbeispielen anhand der beigefügten Zeichnungen, von denen in einer Blockdarstellung
- Figur 1: die Integration der Erfindung in vorhandene Komponenten eines Fahrzeuges und
- Figur 2: die Verwirklichung der Erfindung mit Hilfe eines gesonderten Steuergerätes und zum Rest durch Integration in vorhandene Komponenten eines Fahr- zeugs zeigt.

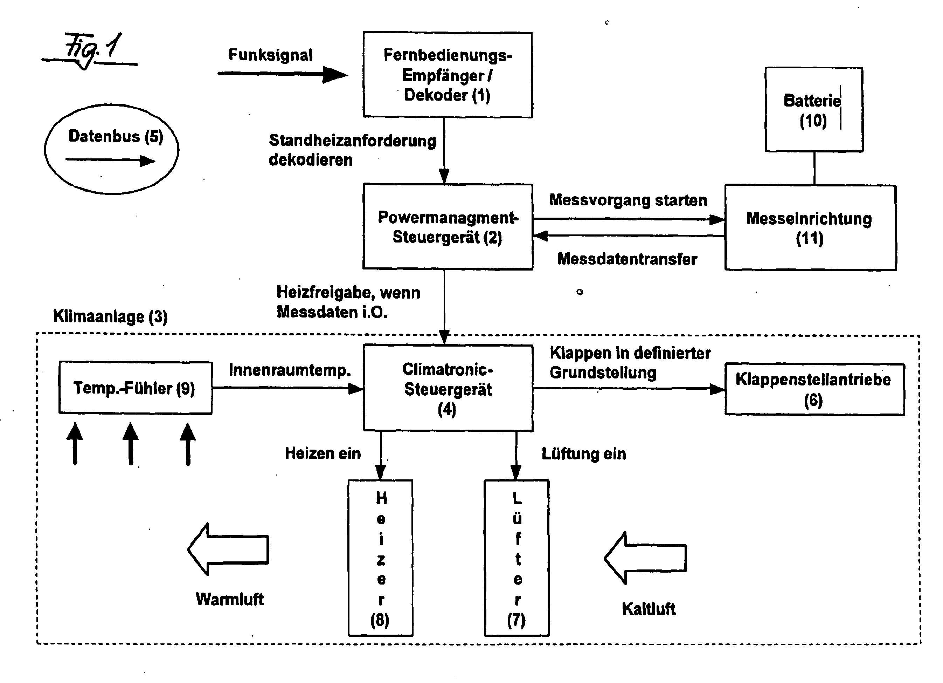

Figur 1 zeigt in Blockdarstellung einen durch Funk betätigbaren Fernbedienungsempfänger 1 mit integriertem Dekoder, ein Steuergerät 2 für Powermanagementaufgaben, z. B für die Sicherstellung einer ausreichenden Ladung der Starterbatterie durch priorisiertes Abschalten von Hochstromverbrauchem und/oder durch Anheben der Leerlaufdrehzahl des Motors. Figur 1 zeigt ferner ein Steuergerät 4 für eine im Fahrzeug vorhandene Klimaanlage 3 für Klappenstellantriebe 6, für einen Lüfter 7 und für einen Zuheizer 8. Das Steuergerät 4 erhält Signale von einem Temperaturfühler 9, welcher auf die Temperatur der Luft im Innenraum des Fahrzeuges anspricht. Ferner ist eine Fahrzeugbatterie 10 vorhanden, deren Ladezustand durch eine Messeinrichtung 11 (z.B. der intelligente Batterie Sensor IBS von Hella) überwacht wird, welche mit dem Steuergerät 2 für das Powermanagement in Verbindung steht. Ein Datenbus 5, z. B. ein CAN-Bus oder ein LIN-Bus, stellt die nachrichtentechnische Vernetzung mit anderen Steuergeräten des Fahrzeuges her.

Im Fahrbetrieb wird der Zuheizer von der Lichtmaschine des Fahrzeuges mit Strom versorgt. Ist das Fahrzeug abgestellt, kann der Zuheizer 8 als Standheizung arbeiten. Zu diesem Zweck kann der Zuheizer 8 durch ein Funksignal, welches der Fembedienungsempfänger 1 empfängt, eingeschaltet werden. Das empfangene Funksignal wird im Fernbedienungsempfänger 1 dekodiert und an das Steuergerät 2 weitergeleitet, welches daraufhin die Messeinrichtung 11 aktiviert oder, falls die Messeinrichtung 11 ständig aktiviert ist, abfragt. Die Messeinrichtung 11 bestimmt den Ladezustand der Batterie 10. Als Messeinrichtung 11 eignet sich z. B. der intelligente Batterie Sensor IBS von Hella. Die Messeinrichtung 11 übermittelt ein Signal, welches eine Information über den Ladezustand der Batterie 10 enthält, an das Steuergerät 2. Das Steuergerät 2 ermittelt aus dem von der Messeinrichtung 11 erhaltenen Signal den Ladezustand der Batterie 10 und vergleicht ihn mit einem im Steuergerät 2 gespeicherten Grenzwert. Liegt der von der Messeinrichtung 11 festgestellte Ladezustand über dem gespeicherten Grenzwert, übermittelt das Steuergerät 2 ein Freigabesignal an das Steuergerät 4 der Klimaanlage 3, welches daraufhin die Klimaanlage 3 durch Betätigen der Klappenstellantriebe 6 in den Umluftbetrieb schaltet und den Zuheizer 8 sowie den Lüfter 7 einschaltet, durch welchen die vom Zuheizer 8 erzeugte Wärme in den Innenraum des Fahrzeuges transportiert wird. Der Zuheizer 8 wird in diesem Fall aus der Batterie 10 mit Strom versorgt.

Der Standheizvorgang endet, wenn der Temperaturfühler 9 das Erreichen einer vorbestimmten Lufttemperatur im Innenraum des Fahrzeuges an das Steuergerät 4 der Klimaanlage meldet, spätestens jedoch, wenn die Messeinrichtung 11, welche nach wie vor aktiv ist oder in regelmäßigen Abständen aktiviert wird, einen Ladezustand der Batterie 10 an das Steuergerät 2 meldet, welcher den im Steuergerät 2 gespeicherten Grenzwert unterschreitet.

Alternativ ist es möglich, aus dem anfänglich gemessenen Ladezustand der Batterie 10 im Steuergerät 2 für das Powermanagement jene Energie zu bestimmen, welche der Batterie 10 entnommen werden kann, bis ihr Ladezustand auf den im Steuergerät 2 gespeicherten Grenzwert abfällt. Durch Messung von Strom, Batteriespannung und Zeit während des Standheizvorganges kann die vom Zuheizer 8 aus der Batterie 10 entnommene Energie überwacht und der Zuheizer 8 abgeschaltet werden, sobald die vorab aus dem anfänglichen Ladezustand der Batterie 10 und dem vorgegebenen Grenzwert ihres Ladezustandes berechnete und für den Standheizvorgang zur Verfügung stehende Energie verbraucht ist.

Aus dem vorab ermittelten Ladezustand der Batterie 10 und dem vorgegebenen Grenzwert ihres Ladezustandes kann in Kenntnis der Batteriespannung und der bauartbedingten Stromaufnahme des Zuheizers 8 durch das Steuergerät 2 für das Powermanagement alternativ die Zeitspanne berechnet werden, nach welcher nach dem Einschalten des Zuheizers 8 der vorgegebene Grenzwert des Ladezustandes der Batterie 10 voraussichtlich erreicht sein wird. Mit Erreichen der berechneten Heizdauer kann das Steuergerät 2 den Zuheizer 8 abschalten und eine Restladung der Batterie 10 sicherstellen, welche zum Starten des Motors jedenfalls noch ausreicht.

Darüberhinaus ist es möglich, die Komponenten, die am Standheizungsbetrieb beteiligt sind, auf funktionsgerechtes Arbeiten zu überwachen und bei Feststellen einer Fehlfunktion einer Komponente den Zuheizer 8 vorsorglich abzuschalten.

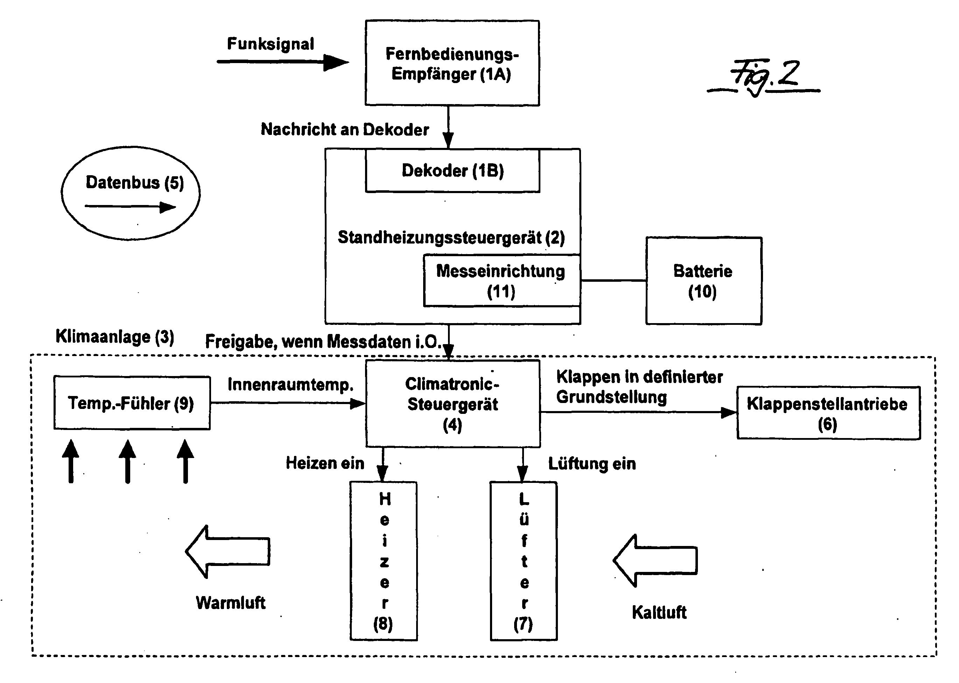

Bei dem in Figur 2 dargestellten zweiten Ausführungsbeispiel sind gleiche oder einander entsprechende Komponenten mit denselben Bezugszahlen wie im ersten Ausführungsbeispiel bezeichnet. Das zweite Ausführungsbeispiel unterscheidet sich vom ersten Ausführungsbeispiel darin, dass das Fahrzeug anstelle eines herkömmlichen Powermanagement-Steuergerätes 2 ein besonderes Steuergerät 2 für das Betreiben des Zuheizers 8 als Standheizung enthält. Der Fernbedienungsempfänger 1a enthält für das Funksignal, welches den Standheizungsbetrieb des Zuheizers 8 aktivieren soll, keinen Dekoder; dieser Dekoder 1b ist vielmehr in das besondere Steuergerät 2 für den Standheizungsbetrieb integriert. In dieses Steuergerät 2 ist weiterhin die Messeinrichtung 11 zur Überwachung des Ladezustandes der Batterie 10 integriert. Der Fernbedienungsempfänger 1 a, die Batterie 10 und die Klimaanlage 3 sind auch in dieser Zusammenstellung herkömmliche Komponenten eines Fahrzeuges, welche durch Einbauen des gesonderten Steuergerätes 2 mit Decoder 1b und Messeinrichtung 11 für das Durchführen des erfindungsgemäßen Verfahrens tauglich werden. Die Arbeitsweise des zweiten Ausführungsbeispieles entspricht vollständig der des ersten Ausführungsbeispieles.

### Bezugszahlen

- 1: Fernbedienungsempfänger mit integriertem Dekoder
- 1a: Fernbedienungsempfänger ohne Dekoder
- 1b: Dekoder
- 2: Steuergerät
- 3: Klimaanlage
- 4: Steuergerät
- 5: Datenbus
- 6: Klappenstellantrieb
- 7: Lüfter
- 8: Zuheizer
- 9: Temperaturfühler
- 10: Fahrzeugbatterie
- 11: Messeinrichtung

## Patentansprüche

1. Verfahren zum Betreiben eines elektrischen Zuheizers in einem Kraftfahrzeug, welches wenigstens eine wieder aufladbare elektrochemische Zelle als Stromquelle und einen mit dieser verbundenen, von einem Antriebsmotor des Kraftfahrzeuges angetriebenen elektrischen Generator hat, von welchem der elektrische Zuheizer bei laufendem Antriebsmotor mit Strom versorgt werden kann, **dadurch gekennzeichnet, dass** der elektrische Zuheizer bei Bedarf auch dann mit Strom versorgt wird, wenn der Generator keinen Strom liefert, indem der Zuheizer auf wenigstens eine elektrochemische Zelle als Stromquelle geschaltet wird, und dass der Ladezustand wenigstens einer elektrochemischen Zelle überwacht und dass eine durch die überwachte wenigstens eine elektrochemische Zelle erfolgende Stromversorgung des elektrischen Zuheizers wieder unterbrochen wird, wenn der Ladezustand der überwachten wenigstens einen elektrochemischen Zelle einen unteren Grenzwert unterschreitet, wobei durch Betätigen eines Klappenstellantriebs in den Umluftbetrieb geschaltet wird, wenn der Zuheizer auf wenigstens eine elektrochemische Zelle als Stromquelle geschaltet wird.

2. Verfahren nach Anspruch 1, **dadurch gekennzeichnet, dass** die Temperatur des Antriebsmotors gemessen und der Grenzwert des Ladezustandes der überwachten elektrochemischen Zelle abhängig von der gemessenen Temperatur ausgewählt wird.

3. Verfahren nach Anspruch 2, **dadurch gekennzeichnet, dass** bei einem wassergekühlten Antriebsmotor die Kühlwassertemperatur gemessen und der Grenzwert des Ladezustandes der überwachten elektrochemischen Zelle in Abhängigkeit von der gemessenen Kühlwassertemperatur ausgewählt wird.

4. Verfahren nach einem der vorstehenden Ansprüche, **dadurch gekennzeichnet, dass** der Grenzwert des Ladezustandes der überwachten elektrochemischen Zelle so vorgewählt wird, dass die beim Erreichen des Grenzwertes des Ladezustandes vorhandene Ladung der überwachten elektrochemischen Zelle zum Starten der Brennkraftmaschine noch ausreicht.

5. Verfahren nach einem der vorstehenden Ansprüche, **dadurch gekennzeichnet, dass** bei einem Kraftfahrzeug, welches ausschließlich durch einen Ottomotor oder durch einen Dieselmotor angetrieben wird, der Grenzwert des Ladezustandes der elektrochemischen Zelle nach einer Vorgabe des Fahrzeugherstellers festgelegt wird.

6. Verfahren nach einem der vorstehenden Ansprüche, **dadurch gekennzeichnet, dass** der elektrische Zuheizer durch ein Funksignal auf wenigstens eine elektrochemische Zelle geschaltet wird.

7. Verfahren nach einem der vorstehenden Ansprüche, **dadurch gekennzeichnet, dass** der elektrische Zuheizer schon vor Erreichen des Grenzwertes des Ladezustandes der überwachten elektrochemischen Zelle wieder abgeschaltet wird, wenn ein auf die Temperatur der Luft im Innenraum des Fahrzeuges ansprechender Temperaturfühler das Überschreiten einer vorgewählten Temperaturschwelle signalisiert.

8. Verfahren nach Anspruch 7, **dadurch gekennzeichnet, dass** die Temperaturschwelle individuell wählbar ist.

9. Verfahren nach einem der vorstehenden Ansprüche, **dadurch gekennzeichnet, dass** der elektrische Zuheizer schon vor Erreichen des Grenzwertes des Ladezustandes der überwachten elektrochemischen Zelle von dieser getrennt wird, wenn die Heizdauer einen vorgewählten Grenzwert überschreitet.

10. Verfahren nach Anspruch 9, **dadurch gekennzeichnet, dass** der Grenzwert der Heizdauer individuell vorwählbar ist.

11. Verfahren nach einem der vorstehenden Ansprüche, **dadurch gekennzeichnet, dass** die überwachte elektrochemische Zelle ein elektrischer Akkumulator ist, insbesondere eine Starterbatterie.

12. Verfahren nach einem der vorstehenden Ansprüche, **dadurch gekennzeichnet, dass** die überwachte elektrochemische Zelle eine Brennstoffzelle ist.

13. Verfahren nach einem der vorstehenden Ansprüche, **dadurch gekennzeichnet, dass** die überwachte elektrochemische Zelle eine Metallhydridbatterie oder ein Lithiumionen-Akkumulator ist.

14. Verfahren nach Anspruch 11, **dadurch gekennzeichnet, dass** nur die Starterbatterie überwacht wird, wenn zusätzlich zur Starterbatterie eine weitere elektrochemische Zelle, insbesondere eine Brennstoffzelle, eine Metallhydrid-Batterie oder ein Lithiumionen-Akkumulator vorgesehen ist.

15. Verfahren nach einem der vorstehenden Ansprüche, **dadurch gekennzeichnet, dass** der elektrische Zuheizer bei stehendem Antriebsmotor im Umluftbetrieb betrieben wird.

## Claims

1. A method for operating an electrical auxiliary heater in a motor vehicle, the electrical auxiliary heater comprising at least one rechargeable electrochemical cell as the power source and an electric generator connected to the power source and driven by the drive motor of the motor vehicle, it being possible for the electrical auxiliary heater to be supplied with current by the generator when the drive motor is running; when the electrical auxiliary heater is not supplied with current by the generator, it can also be supplied with current as required by being connected to at least one electrochemical cell as the power source; the state of charge of at least one electrochemical cell is monitored, and a power supply to the electrical auxiliary heater delivered by the monitored, at least one electrochemical cell is interrupted again if the state of charge of the monitored, at least one electrochemical cell falls below a lower limit value; the air circulation mode is activated via the activation of a flap actuator when the auxiliary heater is connected to at least one electrochemical cell as the power source.

2. The method according to claim 1, **characterized in that** the temperature of the drive motor is measured, and the limit value of the state of charge of the monitored electrochemical cell is selected depending on the temperature that is measured.

3. The method according to claim 2, **characterized in that**, when the drive motor is water-cooled, the coolant temperature is measured and the limit value of the state of charge of the monitored electrochemical cell is selected depending on the temperature that is measured.

4. The method according to one of the preceding claims, **characterized in that** the limit value of the state of charge of the monitored electrochemical cell is preselected such that the charge of the monitored electrochemical cell that exists when the limit value of the state of charge is reached is sufficient to start the internal combustion engine.

5. The method according to one of the preceding claims, **characterized in that**, in the case of a motor vehicle that is driven exclusively by a spark ignition engine or a diesel engine, the limit value of the state of charge of the electrochemical cell is specified according to a requirement by the vehicle manufacturer.

6. The method according to one of the preceding claims, **characterized in that** the electrical auxiliary heater is connected to at least one electrochemical cell by a radio signal.

7. The method according to one of the preceding claims, **characterized in that** the electrical auxiliary heater is switched off again, even before the limit value of the state of charge of the monitored electrochemical cell is reached, when a temperature sensor that senses the temperature of the air in the interior region of the vehicle signals that a preselected temperature threshold has been exceeded.

8. The method according to claim 7, **characterized in that** the temperature threshold can be selected individually.

9. The method according to one of the preceding claims, **characterized in that**, even before the limit value of the state of charge of the monitored electrochemical cell is reached, the electrical auxiliary heater is disconnected from the monitored electrochemical cell if the heating period exceeds a preselected limit value.

10. The method according to claim 9, **characterized in that** the limit value of the heating period can be selected individually.

11. The method according to one of the preceding claims, **characterized in that** the monitored electrochemical cell is an electrical accumulator, in particular a starter battery.

12. The method according to one of the preceding claims, **characterized in that** the monitored electrochemical cell is a fuel cell.

13. The method according to one of the preceding claims, **characterized in that** the monitored electrochemical cell is a metal hydride battery or a lithium ion accumulator.

14. The method according to claim 11, **characterized in that** only the starter battery is monitored if, in addition to the starter battery, a further electrochemical cell is provided, in particular a fuel cell, a metal hydride battery, or a lithium ion accumulator.

15. The method according to one of the preceding claims, **characterized in that** the electrical auxiliary heater is operated in the air recirculation mode when the drive motor is shut off.

## Revendications

1. Procédé pour le fonctionnement d'un chauffage d'appoint électrique dans un véhicule automobile, possédant au moins une cellule électrochimique rechargeable en tant que source de courant, et un générateur électrique, entraîné par un moteur d'entraînement du véhicule automobile et relié à celle-ci, par lequel le chauffage d'appoint électrique peut être alimenté en courant lorsque le moteur d'entraînement est en marche, dans lequel le chauffage d'appoint électrique est si nécessaire également alimenté en courant lorsque le générateur ne fournit pas de courant, en commutant le chauffage d'appoint électrique sur au moins une cellule électrochimique en tant que source de courant, et dans lequel l'état de chargement d'au moins une cellule électrochimique est surveillé et dans lequel l'alimentation en courant du chauffage d'appoint électrique, assurée par l'au moins une cellule électrochimique surveillée, est à nouveau interrompue lorsque l'état de chargement de l'au moins une cellule électrochimique surveillée tombe en-dessous d'une valeur seuil inférieure, **caractérisé en ce que** le mode de fonctionnement à circulation d'air est activé par l'actionnement d'un actuateur mécanique lorsque le chauffage d'appoint électrique est commuté sur au moins une cellule électrochimique en tant que source de courant.

2. Procédé selon la revendication 1, **caractérisé en ce que** la température du moteur d'entraînement est mesurée et la valeur seuil de l'état de chargement de la cellule électrochimique surveillée est sélectionnée en fonction de la température mesurée.

3. Procédé selon la revendication 2, **caractérisé en ce qu'**avec un moteur d'entraînement refroidi à l'eau, la température de l'eau est mesurée et la valeur seuil de l'état de chargement de la cellule électrochimique surveillée est sélectionnée en fonction de la température de l'eau mesurée.

4. Procédé selon l'une des revendications précédentes, **caractérisé en ce que** la valeur seuil de l'état de chargement de la cellule électrochimique surveillée est présélectionnée de manière à ce que le niveau de chargement de la cellule électrochimique surveillée lors de l'atteinte de la valeur seuil de l'état de chargement suffise pour démarrer le moteur à combustion interne.

5. Procédé selon l'une des revendications précédentes, **caractérisé en ce qu'**avec un véhicule automobile entraîné exclusivement par un moteur Otto ou par un moteur Diesel, la valeur seuil de l'état de chargement de la cellule électrochimique est déterminée selon une consigne de fabricant du véhicule automobile.

6. Procédé selon l'une des revendications précédentes, **caractérisé en ce que** le chauffage d'appoint électrique est commuté sur au moins une cellule électrochimique par un signal radio.

7. Procédé selon l'une des revendications précédentes, **caractérisé en ce que** le chauffage d'appoint électrique est de nouveau éteint déjà avant l'atteinte de la valeur seuil de l'état de chargement de la cellule électrochimique surveillée, lorsqu'un détecteur de température réagissant à la température de l'air dans l'espace intérieur du véhicule automobile signale un dépassement d'un seuil de température présélectionné.

8. Procédé selon la revendication 7, **caractérisé en ce que** le seuil de température peut être sélectionné individuellement.

9. Procédé selon l'une des revendications précédentes, **caractérisé en ce que** le chauffage d'appoint électrique est déjà séparé de la cellule électrochimique surveillée avant que celle-ci n'atteigne la valeur seuil de l'état de chargement.

10. Procédé selon la revendication 9, **caractérisé en ce que** la valeur seuil de la durée de chauffage peut être sélectionnée individuellement.

11. Procédé selon l'une des revendications précédentes, **caractérisé en ce que** la cellule électrochimique surveillée est un accumulateur électrique, en particulier une batterie de démarrage.

12. Procédé selon l'une des revendications précédentes, **caractérisé en ce que** la cellule électrochimique surveillée est une cellule à combustible.

13. Procédé selon l'une des revendications précédentes, **caractérisé en ce que** la cellule électrochimique surveillée est une batterie métal hybride ou un accumulateur lithium ion.

14. Procédé selon la revendication 11, **caractérisé en ce que** seule la batterie de démarrage est surveillée lorsqu'une autre cellule électrochimique, en particulier une cellule à combustible, une batterie métal hybride ou un accumulateur lithium ion, est utilisé en plus de la batterie de démarrage.

15. Procédé selon l'une des revendications précédentes, **caractérisé en ce que** le chauffage d'appoint électrique fonctionne en mode circulation d'air lorsque le moteur d'entraînement est arrêté.
